# EUROPÄISCHE PATENTSCHRIFT

(11) **EP 1 456 612 B1**
(45) Veröffentlichungstag und Bekanntmachung des Hinweises auf die Patenterteilung: **08.07.2015**
(21) Anmeldenummer: 02798345.1
(22) Anmeldetag: 18.12.2002
(51) Int. Cl.: G01F 25/00, G01F 23/284, G01D 3/08

(54) **VERFAHREN ZUR BESTIMMUNG UND/ODER ÜBERWACHUNG EINER PHYSIKALISCHEN ODER CHEMISCHEN PROZESSGRÖSSE**
METHOD FOR DETECTING AND/OR MONITORING A PHYSICAL OR CHEMICAL PROCESS VARIABLE
PROCEDE PERMETTANT DE DETERMINER ET / OU DE SURVEILLER UNE GRANDEUR DE PROCESSUS PHYSIQUE OU CHIMIQUE

(30) Priorität: 21.12.2001 DE 10163569
(43) Veröffentlichungstag der Anmeldung: 15.09.2004
(73) Patentinhaber: Endress + Hauser GmbH + Co. KG, 79689 Maulburg (DE)
(72) Erfinder: LUBCKE, Wolfgang, 79585 Steinen (DE)
(74) Vertreter: Andres, Angelika Maria
(86) Internationale Anmeldenummer: PCT/EP2002/014434
(87) Internationale Veröffentlichungsnummer: WO 2003/054481

(56) Entgegenhaltungen:
- EP-A- 0 961 106
- EP-A2- 0 449 590
- WO-A1-99/57693
- DE-C2- 3 990 872
- US-A- 5 614 911
- US-A- 5 689 265
- US-A- 5 948 979
- D.K.H.WONG,D.G.FREDLUND,E.IMRE,G.PUTZ: "Evaluation of AGWA-II Thermal Conductivity Sensors for Soil Suction Measurement", TRANSPORTATION RESEARCH RECORD, vol. 1219, 31 December 1989 (1989-12-31), - 30 June 1990 (1990-06-30), pages 131-143, ISBN: 0-309-04815-X
- J.R.Taylor: "Risk Analysis for Process Plant, Pipelines and Transport", 1 January 1994 (1994-01-01), Chapman&Hall, London ISBN: 0-419-19090-2 pages 169-170,

## Beschreibung

Die Erfindung betrifft ein Verfahren zur Bestimmung bzw. Überwachung eines Füllstands eines flüssigen oder festen Mediums in einem Behälter.

Probleme bei der Bestimmung bzw. Überwachung des Füllstands können auftreten, wenn sich an den Teilen der Meßvorrichtung, die mit dem Meßmedium direkt oder indirekt in Kontakt kommen, Ablagerungen bilden. Allgemein ist in der Meßtechnik in diesem Zusammenhang von Ansatzbildung die Rede. Die Gefahr einer Ansatzbildung an der Meßvorrichtung besteht vermehrt bei klebrigen, zähflüssigen, spritzenden und gerührten Füllgütern. Sie kann aber auch beispielsweise im Falle von Mikrowellen-Meßgeräten bei Kondensatbildung an der Antenne auftreten. Derartige Meßgeräte werden zur Bestimmung des Füllstands eines Füllguts verwendet. Zwar vertragen Mikrowellenantennen ein gewisses Maß an Verschmutzung; die Messung wird jedoch fehlerhaft oder versagt völlig, sobald die Schmutzschicht bzw. die Ansatzbildung ein tolerierbares Maß überschreitet. So wird bei starker Ansatzbildung an der Antenne das Meßsignal letztlich vollständig absorbiert; das Nutzechosignal, das den aktuellen Füllstand des Füllguts repräsentiert, ist dann überhaupt nicht mehr feststellbar.
Drucksensoren, insbesondere hydrostatische Drucksensoren, oder Vibrationsdetektoren, aber auch Durchflußsensoren und Sensoren, mit denen Analysen durchgeführt werden, verhalten sich analog.

Liefern bekannte Meßgeräte keinen Meßwert mehr, so wird bei den aus dem Stand der Technik bekannt gewordenen Lösungen mit dieser Null-Information unterschiedlich umgegangen: Bei Vibrationsdetektoren, die großteils als Überfallsicherungen oder als Leerlaufschutz Verwendung finden, wird umgehend ein Alarmsignal ausgegeben; der letzte als gültig akzeptierte Meßwert wird 'eingefroren'. Gegebenenfalls verbleibt der eingefrorene Meßwert auf der Anzeige des Meßgeräts. Folge eines Alarms ist üblicherweise, daß die betroffenen Teile einer Prozeßanlage umgehend abgeschaltet werden. Um sich zeit- und kostenintensive Analysen zu sparen, wird üblicherweise das fehlerhafte Meßgerät durch ein funktionstüchtiges Meßgeirät ausgetauscht. Beruht die Fehlfunktion auf z. B. einer Ansatzbildung, ist der Ersatz des Meßgeräts natürlich eine unverhältnismäßig teuere Lösung des Problems.

US 5 948 979 A beschreibt ein Verfahren zur Messung des Füllstands eines Füllguts in einem Behälter nach dem Radarprinzip. Bei dem Verfahren werden mittels einer Antenne eines Entfernungsmessgeräts Mikrowellen ausgestrahlt und reflektierte Mikrowellen empfangen. Die empfangenen Mikrowellen werden in dem Entfernungsbereich bis zu der dem Abstand der Antenne des Entfernungsmessgeräts vom Behälterboden entsprechenden Leerdistanz ausgewertet. Falls in diesem Entfemungsbereich keine Echowellen festgestellt werden, erfolgt die Auswertung in einem erweiterten Entfemungsbereich. Die in diesem erweiterten Entfernungsbereich jenseits der Leerdistanz festgestellten Echowellen werden der Leerdistanz zugeordnet.

EP 0 961 106 A beschreibt eine Anordnung zur Messung des Füllstands in einem Behälter mit einem den Füllstand kontinuierlich messenden Füllstandsmessgerät, das ein nach dem Laufzeitverfahren arbeitendes Abstandsmessgerät ist. Eine Messschaltung weist einen am Behälter angeordneten Grenzwertgber auf, der ein elektrisches Signal liefert, das anzeigt, ob der Füllstand im Behälter über oder unter einer von dem Grenzwertgeber zu überwachenden Höhe liegt. Eine Messschaltung empfängt das Ausgangssignal des Grenzwertgebers und vewendet den vom Füllstandsmessgerät ermittelten Füllstands-Messwert zur Kontrolle.

US 5 689 265 A beschreibt ein Füllstandsmessgerät mit einer Antenne, die mit Mikrowellen arbeitet. Die Antenne dient zur Aussendung von Sendewellen zur Oberfläche eines Füllguts, dessen Füllstand gemessen werden soll, und zum Empfangen der an der Oberfläche reflektierten Echowellen. Eine Empfangs- und Auswerteschaltung bildet aus den empfangenen Echowellen eine Echofunktion. Die Empfangs- und Auswerteschaltung ermittelt aus der Echofunktion die Laufzeit der Mikrowellen und bestimmt daraus den Füllstand. Eine Anordnung vergleicht eines von einer Referenz-Reflexionsstelle stammenden Abschnitt der Echofunktion mit einem vorgegebenen Schwellwert und erzeugt ein Signal, welches das Ober bzw. Unterschreiten eines Schwellwertes anzeigt.

US 5 614 911 A beschreibt ein Verfahren zur Füllstandsmessung nach dem Radarprinzip, bei dem mittels einer Antenne Mikrowellen zur Oberfläche eines Füllguts ausgesendet und die an der Oberfläche reflektierten Echowellen empfangen werden. Für jede Messung wird eine Echofunktion aus den empfangenen Echowellen gebildet. Aus der Echofunktion wird das Nutzecho und dessen Laufzeit ermittelt und daraus der Füllstand bestimmt. Die aktuelle Echofunktion wird mit einer gespeicherten ungestörten Echofunktion verglichen und festgestellte Abweichungen werden im Antennenbereich zur Erkennung einer Ansatzbildung ausgewertet.

EP 0 449 590 A beschreibt eine in einem Ofen befindliche Vorrichtung zur Messung eines Schlackenniveaus mit einem Mikrowellen-Radar und einem Wandler. Der Pegel eines Sende- oder Empfangssignals der Vorrichtung wird in Übereinstimmung mit dem Pegel eines Erfassungssignals eingestellt, so dass der Signalpegel in dem Mikrowellenradar konstant eingestellt ist.

Der Erfindung liegt die Aufgabe zugrunde, ein Verfahren vorzuschlagen, das eine zuverlässige Meßwerterfassung und Fehlererkennung / Fehlerfrüherkennung an einem Meßgerät gewährleistet.

Die Aufgabe der Erfindung wird durch die folgenden Verfahrensschritte gelöst: Meßwerte, die den Füllstand repräsentieren, werden aufgenommen; in Abhängigkeit von dem zu überwachenden Prozeß wird ein Wert für ein Zeitintervall, in dem eine Konstanz der Meßwerte tolerierbar ist, bestimmt; die über das Zeitintervall näherungsweise konstanten Meßwerte, bei welchen in dem für den jeweiligen Anwendungsfall ermittelten Zeitintervall keine Änderung auftritt, werden zur Erkennung einer Fehlfunktion, insbesondere zur Ansatzerkennung an einem sensorseitigen Teil des Meßgeräts, und/oder zur Erkennung einer Fehlfunktion einer Elektronik des Meßgeräts und/oder zur Erkennung einer prozeßseitigen Änderung und/oder einer durch den Prozeß hervorgerufenen Fehlfunktion, herangezogen; und die Meßwerte werden über einen Zeitraum als Historiendaten abgespeichert und anhand dieser Historiendaten oder anhand unterschiedlicher Bereiche der Messwerte wird festgestellt, welche Ursache der Fehlfunktion zugrunde liegt.

Eine prozeßseitige Änderung kann sich beispielsweise zeigen, wenn ein Mikrowellen-Meßgerät den Füllstand durch ein dielektrisches Fenster im Deckel des Behälters ermittelt. Bildet sich an dem dielektrischen Fenster eine Schmutzschicht, wird auch hier ein mehr oder weniger ausgeprägter Peak in der Echokurve den Grad der Verschmutzung anzeigen. Verfolgt man die Historie der Meßwerte, läßt sich auch eine klare Aussage treffen, wann die Verschmutzung spätestens zu beseitigen ist, damit die Funktionstüchtigkeit des Meßgeräts weiterhin gewährleistet ist.

Während mehrerer Meßzyklen werden Meßwerte, die den Füllstand repräsentieren, aufgenommen; anhand der Meßwerte wird die durchschnittliche Änderungsrate der Meßwerte und/oder die durchschnittliche Länge eines Zeitintervalls bestimmt, in dem die Meßwerte konstant sind; eine Fehlfunktion wird angezeigt, wenn die durchschnittliche Änderungsrate der Meßwerte unterschritten und/oder wenn die durchschnittliche Länge des Zeitintervalls, in dem ein Meßwert konstant bleibt, überschritten wird.

Gemäß einer vorteilhaften Weiterbildung des erfindungsgemäßen Verfahrens wird mittels einer Trendanalyse erkannt, ob das Meßgerät zur Bestimmung des Füllstands korrekt oder fehlerhaft arbeitet. Neben dieser Ja/Nein Aussage ist es erfindungsgemäß auch möglich, eine Aussage darüber zu treffen, in welchem Bereich des Meßgeräts die Ursache für das Fehlverhalten zu suchen ist. Insbesondere wird hier die Erkenntnis genutzt, daß Fehlfunktionen an einem Meßgerät in den seltensten Fällen schlagartig auftreten. Vielmehr stellen sich Fehlfunktionen üblicherweise schleichend ein. Erst bei Überschreiten eines gewissen Toleranzwertes versagt das Meßgerät völlig und liefert nachfolgend einen Meßwert, der sich zeitlich nicht mehr verändert.

Betrachten wir ein Füllstandsmeßgerät, das hochfrequente Meßsignale über eine Antenne frei in Richtung der Oberfläche eines Füllguts abstrahlt. Beispielhaft sei an dieser Stelle ein Radar-Meßgerät genannt, das von der Anmelderin unter der Bezeichnung MICROPILOT angeboten und vertrieben wird. Die hochfrequenten Meßsignale werden an der Oberfläche des Füllguts reflektiert und gelangen über die Antenne in das Füllstandsmeßgerät zurück. Anhand der sog. Echokurve, die die Amplituden der Meßsignale in Abhängigkeit von der Laufzeit bzw. der Laufstrecke wiedergibt, wird der Abstand der Antenne von der Füllgutoberfläche ermittelt. Das an der Oberfläche des Füllguts reflektierte Meßsignal, das sog. Nutzechosignal, ist in der Echokurve durch einen mehr oder weniger ausgeprägten Peak charakterisiert. Aufgrund der funktionalen Abhängigkeit zwischen dem Peak und der Laufzeit läßt sich die Gesamtlaufstrecke eines Meßsignals von der Antenne zur Oberfläche des Füllguts bestimmen Bei bekannter Behälterhöhe kann aufgrund der Meßwerte der Füllstand des Füllguts in dem Behälter auf einfache Art und Weise berechnet werden.

Je nach Prozeßbedingungen werden sich nun mehr oder weniger schnell Partikel des Füllguts im Antennenbereich des Meßgeräts absetzen. Mit der Zeit wird diese sog. Ansatzbildung so groß, daß letztlich nur noch ein geringer Anteil der Energie der Meßsignale die Antenne, also den sensorseitigen Teil des Meßgeräts, in Richtung der Oberfläche des Füllgutes verlassen kann. Dies führt dazu, daß die Amplitude des an der Oberfläche reflektierten Nuizechosignals ab einem gewissen Verschmutzungsgrad nicht mehr detektiert werden kann. Folglich nimmt der Meßwert einen konstanten Wert an. Wie bereits gesagt, wird nun bei den aus dem Stand der Technik bekannt gewordenen Lösungen der zuletzt detektierte Meßwert eingefroren, ein Alarm gesetzt und ggf. der betroffene Teil der Prozeßanlage stillgelegt. Fraglich ist bei diesen Lösungen jedoch, ob der konstante Meßwert auf eine Fehlfunktion zurückzuführen ist oder einfach auf die Tatsache, daß an dem Meßwert im betrachteten Zeitraum keine Änderung eingetreten ist.

Nun wird in Abhängigkeit von dem zu überwachenden Prozeß ein verläßlicher Wert für das Zeitintervall bestimmt, in dem eine Konstanz des Meßwertes tolerierbar ist. Bevorzugt wird dieses Zeitintervall als Mittelwert einer Vielzahl von Einzelmessungen bestimmt. Die Toleranzen werden anschließend aufgrund der Abweichungen bestimmt, oder aber sie werden manuell eingestellt. Erst wenn während des für den jeweiligen Anwendungsfall ermittelten, üblicherweise maximal auftretenden Zeitintervalls keine Änderung im Meßwert auftritt, wird dies als Fehlfunktion des Meßgeräts interpretiert.

Darüber hinaus sind die Historiendaten abrufbar, also Daten, die es ermöglichen, die zeitliche Varianz eines Meßwertes oder - konkret - der Echokurve über einen beliebig langen Zeitraum zu verfolgen. Anhand dieser Historiendaten läßt sich im Falle einer Fehlfunktion des Meßgeräts die klare Aussage treffen, daß die Fehlfunktion z. B. auf eine Ansatzbildung am sensorseitigen Teil des Meßgeräts zurückzuführen ist. Oder es läßt sich die klare Aussage treffen, daß in der Elektronik des Meßgeräts ein Defekt aufgetreten ist. Im ersten Fall genügt es wenn die Ansatzbildung an dem sensorseitigen Teil des Meßgeräts entfernt wird. Ein Austausch des Meßgeräts ist dann nicht notwendig.

Eine Fehlfunktion wird angezeigt, wenn die Änderungsrate der Meßwerte kleiner ist als die minimal bestimmte Änderungsrate und/oder wenn das Zeitintervall, in dem die Meßwerte näherungsweise konstant sind, größer ist als das maximal ermittelte Zeitintervall. Hier werden also dynamische Größen zur exakten Bestimmung einer Fehlfunktion an einem Meßgerät herangezogen.
Eine Fehlfunktion wird erst angezeigt, wenn ein vorgegebener Toleranzbereich der Änderungsrate der Meßwerte bzw. des Zeitintervalls, in dem ein Meßwert näherungsweise konstant ist, unterschritten bzw. überschritten wird. Hierdurch wird das Risiko eines unnötigen Fehlalarm weiterhin minimiert. Die Toleranzen werden natürlich so gewählt, daß jegliches Risiko für Unfälle in dem überwachten Prozeß ausgeschlossen werden kann. Selbstverständlich läßt sich anhand der zeitlichen Änderungen der Meßwerte bzw. der Meßdaten, aus denen der Füllstand letztlich ermittelt, auch erkennen, daß die Funktionstüchtigkeit eines Meßgeräts abnimmt. Weiterhin läßt sich auch eine Aussage über den Zeitpunkt treffen, an dem das Meßgerät endgültig versagt (→ Predictive Maintenance). Die entsprechende Information wird dem Bedienpersonal zur Verfügung gestellt. Neben der Aussage, daß eine Fehlfunktion vorliegt, läßt sich auch die Aussage treffen, welcher Art die Fehlfunktion ist.

Meßwerte bezüglich des Füllstands werden über ein vorgegebenes Zeitintervall aufgenommen; für den Fall, daß während des Zeitintervalls der Meßwert näherungsweise konstant bleibt, wird zumindest eine weitere Prozeß- und/oder Systemgröße ermittelt; unter Berücksichtigung dieser Prozeß- und/oder Systemgröße wird ein Plausibilitätscheck durchgeführt, wobei mittels des Plausibilitätschecks ermittelt wird, ob die Konstanz des Meßwertes als Fehlfunktion zu interpretieren ist; im Falle einer erkannten Fehlfunktion erfolgt eine Fehlermeldung. Diese Ausgestaltung reduziert die Gefahr eines Fehlalarms nahezu auf Null.

Desweiteren weist das Meßgerät einen Elektronikteil, eine Einkopplung und eine Antenne auf. Hochfrequente Meßsignale werden in Richtung des Füllguts ausgesendet und an der Oberfläche des Füllguts reflektiert; anschließend wird die Echokurve ermittelt, welche die Amplituden der Meßsignale in Abhängigkeit von der Laufzeit bzw. der Laufstrecke der Meßsignale wiedergibt; zumindest ein Echosignal, das vor dem eigentlichen, den Füllstand des Mediums in dem Behälter repräsentierenden Nutzechosignal auftritt, wird zur Erkennung einer Fehlfunktion an der Elektronik oder an der Einkopplung herangezogen.

Die aktuelle Echokurve wird mit einer gespeicherten Echokurve verglichen; eine Fehlfunktion und die Art der Fehlfunktion wird anhand einer Abweichung zwischen der aktuellen Echokurve und der gespeicherten Echokurve erkannt und interpretiert. Da die meisten Fehlfunktionen schleichend eintreten, läßt sich anhand der Historiendaten auch der Zeitpunkt bestimmt, wann das Meßgerät versagt (→ Predictive Maintenance).

Die Erfindung wird anhand der nachfolgenden Zeichnungen näher erläutert. Es zeigt:
Fig. 1: eine schematische Darstellung eines Füllstandsmeßgeräts, das zur Durchführung des erfindungsgemäßen Verfahrens geeignet ist,
Fig. 2: eine schematische Darstellung eines Füllstandsmeßgeräts,
Fig. 2a: eine schematische Darstellung einer Echokurve unter Normalbedingungen,
Fig. 2b: eine schematische Darstellung einer Echokurve eines Füllstandsmeßgeräts, bei dem die Ansatzbildung ein kritisches Ausmaß überschritten hat, und
Fig. 2c: eine schematische Darstellung einer Echokurve eines Füllstandsmeßgeräts, bei dem z. B. ein Kurzschluß im Bereich der Einkopplung aufgetreten ist.

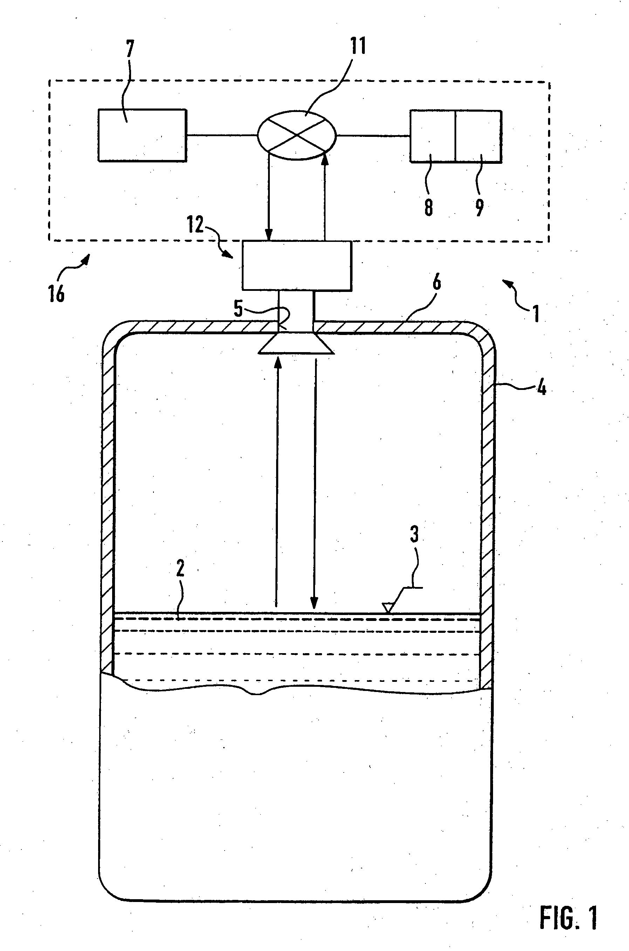

Fig. 1 zeigt eine schematische Darstellung eines Meßgeräts, das zur Durchführung des erfindungsgemäßen Verfahrens geeignet ist. Ein Füllgut 2 ist in einem Behälter 4 gelagert. Zur Bestimmung des Füllstandes des Füllguts 2 in dem Behälter 4 dient das Füllstandsmeßgerät 1, das in einer Öffnung 5 im Deckel 6 des Behälters 4 montiert ist. Im gezeigten Fall handelt es sich bei den Meßsignalen um Mikrowellen, es können jedoch auch Ultraschallwellen oder Laser-Signale sein. Über die Antenne 12 werden in der Signal-erzeugungs-/Sendeeinheit 7 erzeugte Sendesignale, insbesondere Mikrowellen, in Richtung der Oberfläche 3 des Füllguts 2 abgestrahlt. An der Oberfläche 3 werden die Meßsignale als Echosignale teilweise reflektiert. Die Echosignale werden in der Empfangs-/Auswerteeinheit 8, 9 empfangen und ausgewertet. Die korrekte Taktung von Absendung der Sendesignale und Empfang der Echosignale erfolgt über die Sende-Empfangsweiche 11.

Selbstverständlich ist das erfindungsgemäße Verfahren nicht nur in Ver-bindung mit Meßgeräten mit frei abstrahlenden Antennen 12 einsetzbar. Bei einer Vielzahl von Einsatzgebieten, beispielsweise in der Petrochemie, Chemie und Lebensmittelindustrie, sind hochgenaue Messungen des Füllstandes von Flüssigkeiten oder Schüttgütern in Behältern (Tanks, Silos, usw. ) gefordert. Deshalb kommen hier in zunehmendem Maße Meßgeräte zum Einsatz, bei denen kurze elektromagnetische Hochfrequenzimpulse oder kontinuierliche Mikrowellen in ein leitfähiges Element eingekoppelt und mittels des leitfähigen Elements in den Behälter, in dem das Füllgut gelagert ist, hineingeführt werden. Bei dem leitfähigen Element handelt es sich beispiels-weise um eine Seilsonde oder um eine Stabsonde.

Physikalisch gesehen wird bei dieser Meßmethode der Effekt ausgenutzt, daß an der Grenzfläche zwischen zwei verschiedenen Medien, z. B. Luft und Öl oder Luft und Wasser, infolge der sprunghaften Änderung (Diskontinuität) der Dielektrizitätszahlen beider Medien ein Teil der geführten Hochfrequenz-Impulse bzw. der geführten Mikrowellen reflektiert und über das leitfähige Element zurück in die Empfangseinheit geleitet wird. Der reflektierte Anteil ist dabei um so größer, je größer der Unterschied in den Dielektrizitätszahlen der beiden Medien ist. Anhand der Laufzeit des reflektierten Anteils der Hochfrequenz-Impulse bzw. der Mikrowellen läßt sich die Entfernung zur Grenzfläche bestimmen. Bei Kenntnis der Leerdistanz des Behälters kann auch hier der Füllstand des Füllguts in dem Behälter berechnet werden. Eine entsprechende Vorrichtung wird beispielsweise in der US-PS 5,361,070 beschrieben. Dieses Verfahren ist übrigens unter dem Namen TDR (Time Domain Reflectrometry) bekannt. Entsprechende Meßgeräte werden von der Anmelderin unter der Bezeichnung LEVELFLEX angeboten und vertrieben.

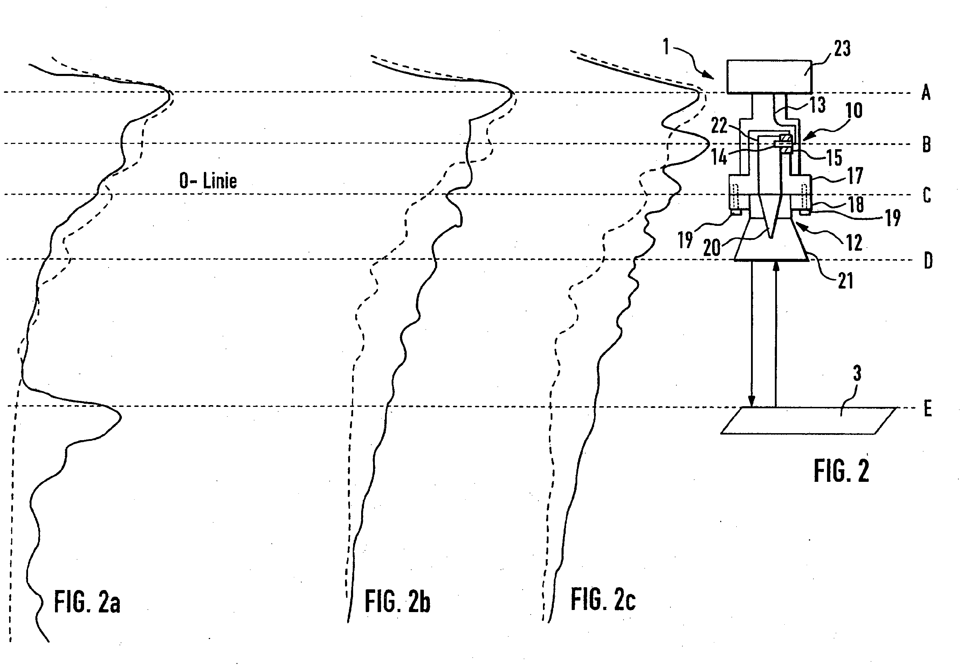

In der Fig. 2 ist schematisch ein Füllstandsmeßgerät 1 dargestellt, das hochfrequente Meßsignale in Richtung der Oberfläche 3 eines nicht gesondert dargestellten Füllguts 2 abstrahlt. Im Unterschied zu dem in Fig. 1 gezeigten Füllstandsmeßgerät 1 sind hier die wesentlichen Teile des sensorseitigen Teils 12 detailliert dargestellt. Die Meßsignale werden in der Elektronik 16 bzw. in dem Hochfrequenzmodul 23, erzeugt und über ein Koax-Kabel 13 in den Hohlleiter 22 eingespeist. Die Einspeisung der Meßsignale in die Antenne 12 erfolgt über den Sendedraht 14, der im gezeigten Fall durch die Seitenwand in den Hohlleiter 22 eingeführt ist. Der Hohlleiter 22 ist zumindest teilweise mit einem dielektrischen Material 20 ausgefüllt, welches in Senderichtung der Meßsignale konisch ausgebildet ist. Ebenso wie das hornförmige Element 21 dient auch die spezielle Form des dielektrischen Materials 20 dazu, die Meßsignale zielgerichtet zu senden und zu empfangen.

In der Fig. 2 sind fünf schraffierte Linien eingezeichnet, die mit A, B, C, D und E gekennzeichnet sind. Diese Linien kennzeichnen markante Bereiche des Füllstandsmeßgeräts 1. A kennzeichnet den Ausgang vom Hochfrequenz-modul 23; B markiert den Bereich der Einkopplung 10. C steht für den Bereich, in dem die Unterkante des Flansches 17 zu liegen kommt. Definitionsgemäß wird diese Linie im gezeigten Fall als 0-Linie bezeichnet, d.h. ab dem Zeitpunkt, ab dem die Meßsignale diese Schwelle überschreiten, startet die Messung der Laufzeit, die die Meßsignale für ihren Weg zur Oberfläche 3 hin und zurück benötigen. D charakterisiert den Bereich der Unterkante des homförmigen Elements 21 und E die Oberfläche 3 des Füllguts. Gemeinsam ist den mit A, B, C, D, E gekennzeichneten Bereichen, daß sie Übergänge definieren, an denen die Meßsignale Reflexionen erfahren.

In den Figuren Fig. 2a, Fig. 2b, Fig. 2c sind verschiedene Echokurven dargestellt. Die gestrichelte Kurve kennzeichnet jeweils die sog. Referenz-Echokurve, die beispielsweise zum Zeitpunkt der Erstinbetriebnahme des Meßgeräts als dessen charakteristische Echokurve aufgenommen wird.
Die durchgezogene Echokurve in Fig. 2a gibt eine typische Echokurve bei einem funktionstüchtigen Füllstandsmeßgerät 1 wieder. Hier ist der Peak des sog. Nutzechosignals gut detektierbar. Dieses Nutzechosignal dient - wie bereits erwähnt - zur Bestimmung des Abstandes von der 0-Linie zur Oberfläche 3 des Füllguts. Klar ersichtlich ist anhand der Fig. 2a, daß Reflexionen der Meßsignale am Ausgang des Hochfrequenzmoduls 23 (in Fig. 1 mit Elektronik 16 bezeichnet), im Bereich der Einkopplung 10, an der Unterkante des Flansches 17 und an der Unterkante des hornförmigen Elements 21 auftreten.

Ein ganz anderes Aussehen zeigen die beiden durchgezogenen Linien in den Figuren Fig. 2b und Fig. 2c, wobei der Verlauf der beiden Echokurven zwischen der 0-Linie und der Oberfläche 3 des Füllguts nahezu identisch ist. Die Unterschiede in den beiden Echokurven liegen im wesentlichen zwischen der 0-Linie und der mit B gekennzeichneten Linie.
Fig. 2b zeigt den Verlauf der Echokurve, wenn die Antenne 12 eine kritische Ansatzbildung aufweist. In Fig. 2c ist der Verlauf der Echokurve bei einem Kurzschluß im Bereich der Einkopplung 10 zu sehen.

Folge beider Defekte ist, daß das Füllstandsmeßgerät 1 nicht mehr funktioniert. Beispielsweise bleibt der Meßwert über einen für das System untypisch langen Zeitraum konstant. Erfindungsgemäß wird dann eine Fehtfunktion des Füllstandsmeßgeräts 1 gefolgert. Anhand der Historiendaten oder anhand unterschiedlicher Bereiche der Echokurve läßt sich darüber hinaus verläßlich feststellen, welche Ursache die Fehlfunktion zugrunde liegt. Wie bereits erwähnt, liegt der Unterschied zwischen den in Fig. 2b und Fig. 2c dargestellten Echokurven in dem Bereich vor der 0-Linie. Während die Echokurve aus Fig. 2b im Bereich der Linie B ein Plateau aufweist, zeigt die entsprechende Echokurve in Fig. 2c einen deutlichen Peak. Dieser ausgeprägte Peak gibt verläßlich Aufschluß darüber, daß im Bereich der Einkopplung 10 ein Kurzschluß aufgetreten ist. Das Meßgerät 1 ist folglich defekt und muß umgehend ausgetauscht werden. Hingegen läßt sich aus dem Aussehen des entsprechenden Abschnitts der Echokurve in Fig. 2b schließen, daß die Fehlfunktion des Füllstandsmeßgeräts 1 auf eine Ansatzbildung im Antennenbereich zurückzuführen ist. In diesem Fall genügt es, die Antenne zu reinigen, um die Funktionstüchtigkeit des Füllstandsmeßgeräts 1 wieder herzustellen.

## Patentansprüche

1. Verfahren zur Bestimmung und/oder Überwachung eines Füllstands eines flüssigen oder festen Mediums in einem Behälter,
wobei Meßwerte von einem Messgerät aufgenommen werden, die den Füllstand repräsentieren,
**dadurch gekennzeichnet,**
**dass** in Abhängigkeit von dem zu überwachenden Prozeß ein Wert für ein Zeitintervall, in dem eine Konstanz der Meßwerte tolerierbar ist, bestimmt wird, dass die über das Zeitintervall näherungsweise konstanten Meßwerte, bei welchen in dem für den jeweiligen Anwendungsfall ermittelten Zeitintervall keine Änderung auftritt, zur Erkennung einer Fehlfunktion, insbesondere zur Ansatzerkennung an einem sensorseitigen Teil des Meßgeräts, und/oder
zur Erkennung einer Fehlfunktion einer Elektronik des Meßgeräts und/oder zur Erkennung einer prozeßseitigen Änderung und/oder einer durch den Prozeß hervorgerufenen Fehlfunktion, herangezogen werden, und
**dass** die Meßwerte über einen Zeitraum als Historiendaten abgespeichert werden und anhand dieser Historiendaten oder anhand unterschiedlicher Bereiche der Messwerte festgestellt wird, welche Ursache der Fehlfunktion zugrunde liegt.

2. Verfahren nach Anspruch 1,
**dadurch gekennzeichnet,**
**dass** das bestimmte Zeltintervall als ein Mittelwert aus einer Vielzahl von Einzelmessungen ermittelt wird.

3. Verfahren nach Anspruch 1 oder 2,
**dadurch gekennzeichnet,**
**dass** Toleranzen des bestimmten Zeitintervalls aufgrund von Abweichungen ermittelt werden oder aber manuell eingestellt werden.

4. Verfahren nach Anspruch 1,
**dadurch gekennzeichnet,**
**daß** falls während des bestimmten Zeitintervalls der Meßwert näherungsweise konstant bleibt, zumindest eine weitere Prozeß- und/oder Systemgröße ermittelt wird,
wobei unter Berücksichtigung dieser Prozeß- und/oder Systemgröße ein Plausibilitätscheck durchgeführt wird, wobei mittels des Plausibilitätschecks ermittelt wird, ob die Konstanz des Meßwertes als Fehlfunktion zu interpretieren ist, und
wobei im Falle einer erkannten Fehlfunktion eine Fehlermeldung erfolgt.

5. Verfahren nach Anspruch 1,
**dadurch gekennzeichnet,**
**dass** die Historiendaten es ermöglichen, die zeitliche Varianz der Meßwerte über einen beliebig langen Zeitraum zu verfolgen, indem Historiendaten der abgespeicherten Messwerte mit den aktuellen Messwerten verglichen werden, und wobei anhand der Historiendaten eine schleichende Fehlfunktion erkannt wird.

6. Verfahren nach Anspruch 1,
**dadurch gekennzeichnet,**
**dass** der Füllstand eines Füllguts in einem Behälter über die Laufzeit von frei abgestrahlten oder geführten Meßsignalen ermittelt wird.

7. Verfahren nach Anspruch 6,
**dadurch gekennzeichnet,**
**dass** ein den Füllstand repräsentierender Meßwert über die Echokurve, die die Amplituden der Meßsignale in Abhängigkeit von der Laufzeit bzw. der Laufstrecke darstellt, bestimmt werden.

8. Verfahren nach Anspruch 7,
**dadurch gekennzeichnet,**
**dass** die aktuelle Echokurve mit einer gespeicherten Echokurve verglichen wird und dass eine Fehlfunktion und die Art der Fehlfunktion anhand einer Abweichung zwischen der aktuellen Echokurve und der gespeicherten Echokurve erkannt und interpretiert wird.

## Claims

1. Procedure to determine and/or monitor a level of a liquid or solid medium in a vessel,
wherein measured values that represent the level are recorded by a measuring device,
**characterized in that**
depending on the process to be monitored, a value is determined for a time interval in which a constancy of the measured values is tolerable,
**in that** the measured values which are approximately constant over the time interval and which do not show a change in the time interval determined for the specific application are used to detect a malfunction, particularly the detection of deposit buildup on a part of the measuring device on the sensor side and/or
to detect a malfunction of electronics of the measuring device and/or to detect a change on the process side and/or a malfunction caused by the process, and
**in that** the measured values are saved as history data over a period and that on the basis of these history data or on the basis of different measured value ranges it is possible to determine the cause of the malfunction.

2. Procedure as claimed in Claim 1,
**characterized in that**
the specific time interval is determined as an average of numerous individual measurements.

3. Procedure as claimed in Claim 1 or 2,
**characterized in that**
tolerances of the specific time interval are determined on the basis of deviations or are set manually.

4. Procedure as claimed in Claim 1,
**characterized in that**
if the measured value remains approximately constant during the specific time interval, at least one additional process variable and/or system variable is determined, wherein a plausibility check is performed taking this process and/or system variable into consideration, wherein the plausibility check helps determine whether the constancy of the measured value should be interpreted as a malfunction, and
wherein an error message is displayed if a malfunction is detected.

5. Procedure as claimed in Claim 1,
**characterized in that**
the history data make it possible to track the chronological variation of the measured values over a period of any length by comparing history data of the saved measured values against the current measured values, and wherein a creeping malfunction is determined on the basis of the history data.

6. Procedure as claimed in Claim 1,
**characterized in that**
the level of a product in a vessel is determined by the time-of-flight of freely emitted or guided measuring signals.

7. Procedure as claimed in Claim 6,
**characterized in that**
a measured value representing the level is determined via the echo curve that represents the amplitudes of the measuring signals as a function of the time-of-flight or flight path.

8. Procedure as claimed in Claim 7,
**characterized in that**
the current echo curve is compared against a saved echo curve and **in that** a malfunction and the type of malfunction is determined and interpreted on the basis of a deviation between the current echo curve and the saved echo curve.

## Revendications

1. Procédé destiné à la détermination et/ou la surveillance d'un niveau d'un liquide ou d'un produit solide dans un réservoir,
pour lequel les valeurs mesurées, qui représentent le niveau, sont enregistrées par un appareil de mesure,
**caractérisé**
**en ce qu'**est déterminée, en fonction du process à surveiller, une valeur pour un intervalle de temps, au sein duquel une constance des valeurs mesurées est tolérable,
**en ce que** les valeurs mesurées à peu près constantes pendant l'intervalle de temps, valeurs pour lesquelles aucun changement n'intervient pendant l'intervalle de temps déterminé pour chaque cas d'application, sont utilisées en vue de la détection d'un dysfonctionnement, notamment en vue de la détection d'un dépôt sur une partie côté capteur de l'appareil de mesure, et/ou
en vue de la détection d'un dysfonctionnement d'une électronique de l'appareil de mesure et/ou
en vue de la détection d'un changement côté process et/ou d'un dysfonctionnement occasionné par le process, et
**en ce que** les valeurs mesurées sont enregistrées pendant une période en tant que données historiques et en ce que l'on détermine, sur la base de ces données historiques ou sur la base de différentes plages des valeurs mesurées, quelle cause est à l'origine du dysfonctionnement.

2. Procédé selon la revendication 1,
**caractérisé**
**en ce que** l'intervalle de temps défini est déterminé en tant que valeur moyenne d'un grand nombre de mesures individuelles.

3. Procédé selon la revendication 1 ou 2,
**caractérisé**
**en ce que** les tolérances de l'intervalle de temps défini sont déterminées sur la base d'écarts ou sont réglées manuellement.

4. Procédé selon la revendication 1,
**caractérisé**
**en ce qu'**au cas où la valeur mesure reste à peu près constante pendant l'intervalle de temps défini, au moins une autre grandeur process et/ou une grandeur système sont déterminées,
pour lequel un test de plausibilité est effectué en tenant compte de cette grandeur process et/ou grandeur système, pour lequel l'on détermine, au moyen du test de plausibilité, si la constance de la valeur mesurée doit être interprétée comme un dysfonctionnement,
et
pour lequel un message d'erreur est émis en cas de dysfonctionnement détecté.

5. Procédé selon la revendication 1,
**caractérisé**
**en ce que** les données historiques permettent de suivre la variance temporelle des valeurs mesurées sur une période de longueur quelconque, en ce que les données historiques des valeurs mesurées enregistrées sont comparées avec les valeurs mesurées actuelles, et pour lequel un dysfonctionnement latent est détecté sur la base des données historiques.

6. Procédé selon la revendication 1,
**caractérisé**
**en ce que** le niveau de remplissage d'un produit dans un réservoir est déterminé par le biais du temps de propagation de signaux de mesure à rayonnement libre ou guidés.

7. Procédé selon la revendication 6,
**caractérisé**
**en ce qu'**une valeur mesurée représentant le niveau de remplissage est déterminée par le biais de la courbe d'écho, qui représente les amplitudes des signaux de mesure en fonction du temps de propagation ou de la distance de propagation.

8. Procédé selon la revendication 7,
**caractérisé**
**en ce que** la courbe d'écho actuelle est comparée avec une courbe d'écho enregistrée et en ce qu'un dysfonctionnement et la nature du dysfonctionnement sont détectés et interprétés sur la base d'un écart entre la courbe d'écho actuelle et la courbe d'écho enregistrée.
